# EUROPÄISCHE PATENTSCHRIFT

(11) **EP 0 898 093 B1**
(45) Veröffentlichungstag und Bekanntmachung des Hinweises auf die Patenterteilung: **06.04.2005**
(21) Anmeldenummer: 98114865.3
(22) Anmeldetag: 07.08.1998
(51) Int. Cl.: F16F 9/53

(54) **Ventil und Stossdämpfer auf Basis elektrorheologischer Flüssigkeiten**
Electro-rheological fluid valve and damper
Soupape et amortisseur à fluide électrorhéologique

(30) Priorität: 19.08.1997 DE 19735898
(43) Veröffentlichungstag der Anmeldung: 24.02.1999
(73) Patentinhaber: Bayer Chemicals AG, 51368 Leverkusen (DE); CARL SCHENCK AG, 64293 Darmstadt (DE)
(72) Erfinder: Wendt, Eckhardt, Dr., 51373 Leverkusen (DE); Büsing, Klaus, 50676 Köln (DE); Scherk, Horst, 64372 Ober-Ramstadt (DE); Rosenfeldt, Horst, 64846 Grosszimmern (DE)
(74) Vertreter: von Kirschbaum, Alexander, Dipl.-Ing.

(56) Entgegenhaltungen:
- EP-A- 0 478 273
- DE-C- 3 808 521
- GB-A- 1 282 568

## Beschreibung

Ventile auf Basis elektrorheologischer Flüssigkeiten beruhen auf dem Prinzip der Beeinflußung des Fließvermögens einer durch den von zwei Kondensatorplatten gebildeten Spalt hindurchtretenden Flüssigkeit, der elektrorheologischen Flüssigkeit, deren Viskosität durch das zwischen den Katalysatorplatten herrschendem elektrischen Feld beeinflußt wird, so daß sich der Durchflußwiderstand der Flüssigkeit durch den Spalt ändert.

Solche Ventile finden insbesondere in Form von aktiven Stoßdämpfern und Dämpfungslagern Anwendung, siehe z.B. US-A 2,661,596 und US-A 4,880,216. Aktiv" bedeutet dabei, daß das Dämpfungsverhalten derartiger Stoßdämpfer und Lager über Bewegungssensoren aufgrund des augenblicklich herrschenden Bewegungszustandes durch Steuerung des zwischen den Kondensatorplatten (Ventilspalt) erzeugten elektrischen Feldes gesteuert werden kann.

Das Dokument GB-A-1 282 568 zeigt die Merkmale des Oberbegriffs von Anspruch 1.

Der Schaltfaktor bezeichnet den Zusammenhang zwischen übertragbarer Schubspannung mit (τ_{E}) und ohne (τ_{O}) Feldeinwirkung. Er ist definiert als der Quotient aus τ_{E}, der übertragbaren zusätzlichen Schubspannung und der Basisspannung τ_{O}. Die bisher erreichbaren Schaltfaktoren standen einem breiten Einsatz elektrorheologischer Ventile in der Hydraulik und bei Stoßdämpfern und Dämpfungslagern bisher entgegen.

Die Erfindung hat sich die Aufgabe gestellt, derartige Ventile mit vielfach erhöhtem Schaltfaktor zur Verfügung zu stellen, die ferner aufgrund ihrer konstruktiven Einfachheit für einen breiten Einsatz geeignet sind.

Gegenstand der vorliegenden Erfindung ist ein Ventil nach Anspruch 1.

Vorzugsweise ist der Ventilspalt derart ausgebildet, daß die Durchflußrichtung durch den Ventilspalt gradlinig ist und der Querschnitt des Spaltes quer zur Durchflußrichtung mäanderformig ausgebildet ist. Durch die erfindungsgemäße Gestaltung des Ventilspaltes läßt sich ein relativ großer Durchtrittsquerschnitt bei kleiner Spaltweite realisieren, so daß ein hoher Schaltfaktor erzielt wird.

Bevorzugt besteht das erfindunosgemäße Ventil aus einem zylindrischen Gehäuse, das die erste und zweite Kammer sowie Einbauten zur Trennung der Kammern unter Freilassung eines zur Zylinderachse parallelen Ventilspaltes enthält.

Die Weite des Ventilspaltes, d.h. der Abstand der beiden leitenden Begrenzungsflächen des Ventilspaltes, kann erfindungsgemäß unter 1 mm, vorzugsweise unter 0,6 mm betragen. Besonders bevorzugte Spaltweiten liegen zwischen 0,2 und 0,5 mm, so daß die erforderliche Spannung zur Absperrung des Ventils im Bereich von 1 bis 3 kV gehalten werden kann.

Die Ausdehnung des Ventilspaltes in Durchströmrichtung, d.h. die Spaltlänge kann das 20- bis 200fache der Spaltweite betragen.

Aufgrund des erfindungsgemäß mäanderförmig ausgebildeten Querschnitts des Ventilspaltes gelingt es, bei vergleichsweise geringer Querschnittsfläche der beidseitig des Spaltes vorgesehenen Kammern sehr große Spaltbreiten zu realisieren. Dabei kann die Spaltbreite quer zur Durchflußrichtung das 2- bis 50fache, vorzugsweise das 10- bis 20fache der Spaltlänge betragen. Insbesondere kann die Spaltbreite das 200- bis 3000fache der Spaltweite betragen. Dabei werden freie Durchtrittsquerschnitte durch den Ventilspalt von mehreren cm² erreicht, insbesondere 1 bis 5 cm². Gegenstand der Erfindung ist auch ein Stoßdämpfer.

Als erfindungsgemäß einsetzbare elektrorheologische Flüssigkeiten werden Dispersionen feinverteilter hydrophiler Teilchen in hydrophoben elektrisch nicht leitenden Ölen (allgemein kolloidale Suspensionen elektrisch polarisierbarer nicht leitender Teilchen) geeignet, die unter Einfluß eines elektrischen Feldes mit hinreichend starker elektrischer Feldstärke schnell und reversibel ihre Fließgrenze unter Umständen über mehrere Größenordnungen ändern. Die elekrorheologische Flüssigkeit wechselt dabei unter dem Einfluß des elektrischen Feldes gegebenenfalls vom dünnflüssigen über den plastischen bis zum festen Aggregatzustand. Beispiele für geeignete elektrorheologische Flüssigkeiten sind in den DE 3 517 281 A1, DE 3 536 934 A1, DE 3 941 232 A1, DE 4 026 881 A1, DE 4 131 142 A1 und DE 4 119 670 A1 offenbart.

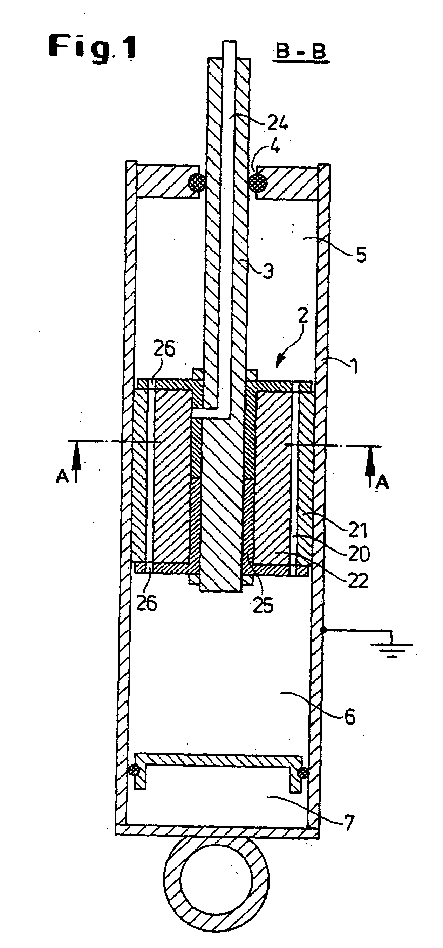

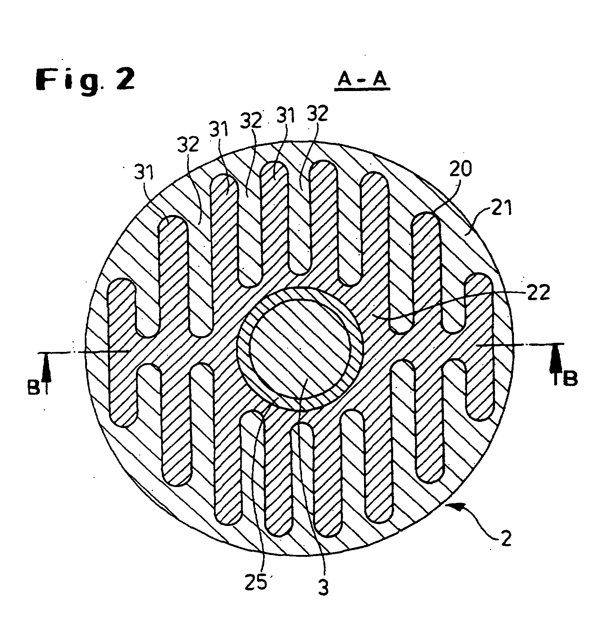

Die Erfindung wird anhand der beigefügten Figuren 1 und 2 am Beispiel eines Stoßdämpfers näher erläutert:
- Fig 1: zeigt einen Längsschnitt durch einen erfindungsgemäßen Stoßdämpfer.
- Fig. 2: zeigt einen Querschnitt durch einen erfindungsgemäßen Stoßdämpfer.

Der Stoßdämpfer gemäß Fig. 1 besteht aus einem zylindrischen Gehäuse 1, mit einem axial verschiebbaren Kolben 2 der mit einer Kolbenstange 3 verbunden ist und über die Durchführung 4 aus dem Gehäuse 1 herausgeführt ist. Der Kolben 2 trennt die beiden Kammern 5 und 6, die mit einer elektroviskosen Flüssigkeit gefüllt sind. Ferner ist eine Druckluftkammer 7 vorgesehen, die dem Ausgleich thermischer Volumenschwankungen der elektrorheologischen Flüssigkeit dient. Der Kolben 2 wird von dem Ventilspalt 20 durchdrungen, wobei die äußere Ventilspaltbegrenzungsfläche 21 aus leitfähigem Material gebildet ist, die in Kontakt mit dem geerdeten Gehäuse 1 steht. Die innere Ventilspaltbegrenzungsfläche 22 besteht ebenfalls aus leitfähigem Material und ist mit der durch die Kolbenstange 3 geführten Hochspannungsleitung 24 verbunden. Die Kolbenstange 3 ist durch die Isolationsschicht 25 gegen den Kolben 2 isoliert. Die äußere und innere Spaltbegrenzung 21 und 22 sind ferner durch das isolierende Material 25 mechanisch verbunden. Eine Vielzahl von Bohrungen 26 durch die die Kolbenelemente 21 und 22 verbindenden Isolatorplatten 25 ermöglichen den Ein- und Austritt der elekrorheologischen Flüssigkeit in den Ventilspalt 20.

Figur 2 zeigt einen Schnitt A-A durch den Kolben 2 gemäß Figur 1. Gleiche Ziffern bezeichnen gleiche Elemente wie in Figur 1. Aus Gründen der Zeichnungsvereinfachung ist der Ventilspalt 20 als schwarz ausgefüllte, mäanderförmige Linie dargestellt. Die innere und äußere Elektrode 21 und 22 weisen jeweils eine Vielzahl von aus fertigungstechnischen Gründen parallelen Zotten 31 und 32 auf, die unter Freilassung des Ventilspaltes 20 ineinandergreifen. Selbstverständlich ist es erfindungsgemäß nicht ausgeschlossen, daß die Zotten 31 und 32 auch radial angeordnet werden können.

## Patentansprüche

1. Ventil auf Basis elektrorheologischer Flüssigkeiten enthaltend mindestens eine erste Kammer (5), die durch einen Ventilspalt (20) mit mindestens einer zweiten Kammer (6) verbunden ist, wobei die Kammern (5, 6) und der Spalt. (20) mit einer elektrorheologischen Flüssigkeit gefüllt sind, die Begrenzungsflächen(21, 22) des Ventilspaltes (20) aus elektrisch leitfähigem Material bestehen und gegeneinander elektrisch isoliert sind, sowie eine Hochspannugsquelle, deren Spannungspole mit je einer der Begrenzungsflächen (21, 22) verbunden werden können,
**dadurch gekennzeichnet,**
**dass** ein einziger Ventilspalt (20) mit mäanderförmigem Querschnitt vorgesehen ist und
**dass** die Begrenzungsflächen (21, 22) des Ventilspaltes (20) jeweils eine Vielzahl paralleler Zotten (31, 32) aufweisen, die unter Freilassung des mäanderförmigen Ventils (20) ineinandergreifen.

2. Ventil nach Anspruch 1, **dadurch gekennzeichnet, dass** der Querschnitt des Ventilspaltes (20) quer zur Durchflussrichtung von einer Kammer (5, 6) zur anderen (6, 5) mäanderförmig ausgebildet ist.

3. Ventil nach Anspruch 1 oder 2, **dadurch gekennzeichnet, dass** der Ventilspalt (20) einen im Wesentlichen ringförmig geschlossenen Querschnitt aufweist.

4. Ventil nach einem der Ansprüche 1 - 3, bestehend aus einem zylindrischen Gehäuse (1), das die erste (5) und zweite Kammer (6) sowie Einbauten zur Trennung der Kammern unter Freilassung eines zur Zylinderachse parallelen Ventilspaltes (20) enthält.

5. Ventil nach Anspruch 4, wobei der Ventilspalt (20) in Form eines mäanderförmigen Ringspaltes ausgebildet ist.

6. Ventil nach einem der Ansprüche 1 bis 5, wobei das Verhältnis von Spaltweite zu Spaltlänge 1/20 bis 1/200 beträgt.

7. Ventil nach einem der Ansprüche 1 bis 6, wobei das Verhältnis von Spaltbreite quer zur Durchflussrichtung zu Spaltlänge 3 bis 50, vorzugsweise 10 bis 20 beträgt.

8. Stoßdämpfer umfassend ein Ventil nach einem der Ansprüche 4 bis 7, wobei die Einbauten zur Trennung der Kammern (5,6) in Form eines in dem zylinderförmigen Gehäuse (1) axial verschiebbaren Kolbens (2) mit Ventilspalt (20) ausgebildet ist, der Kolben(2) mit einer axialen Kolbenstange (3) verbunden ist und die Kolbenstange (3) aus dem Gehäuse (1) herausgeführt ist.

## Claims

1. A valve based on electrorheological liquids, containing at least one first chamber (5) which is connected via a valve aperture (20) to at least one second chamber (6), wherein the chambers (5, 6) and the aperture (20) are filled with an electrorheological liquid, the boundary faces (21, 22) of the valve aperture (20) consist of electrically conductive material and are electrically insulated from each other, and comprising a source of high voltage, each of the voltage terminals of which can be connected to one of the boundary faces (21, 22),
**characterised in that**
a single valve aperture (20) with a meander-shaped cross-section is provided, and
the boundary faces (21, 22) of the valve aperture (20) each have a plurality of parallel spines (31, 32) which interengage leaving the meander-shaped valve (20) free.

2. A valve according to claim 1, **characterised in that** the cross-section of the valve aperture (20) transverse to the direction of flow from one chamber (5, 6) to the other (6, 5) is of meander-shaped construction.

3. A valve according to claims 1 or 2, wherein the valve aperture (20) has a substantially closed annular cross section.

4. A valve according to one of claims 1-3, consisting of a cylindrical housing (1) which contains the first (5) and second chambers (6) as well as built-in components for the separation of the chambers whilst leaving a valve aperture (20) free which is parallel to the cylinder axis.

5. A valve according to claim 4, wherein the valve aperture (20) is constructed in the form of a meander-shaped annular aperture.

6. A valve according to any one of claims 1 to 5, wherein the ratio of the aperture width to the aperture length is 1/20 to 1/200.

7. A valve according to any one of claims 1 to 6, wherein the ratio of the extent of the aperture transverse to the direction of flow to the aperture length is 3 to 50, preferably 10 to 20.

8. A shock absorber comprising a valve according to any one of claims 4 to 7, wherein the built-in components for the separation of the chambers (5, 6) is constructed in the form of a piston (2) which comprises a valve aperture (20) and which is axially displaceable in the cylindrical housing (1), the piston (2) is attached to an axial piston rod (3) and the piston rod (3) is led out of the housing (1).

## Revendications

1. Soupape à fluide électrorhéologique comprenant au moins une première chambre (5), qui est reliée par l'intermédiaire d'une fente de soupape (20) à au moins une seconde chambre (6), les chambres (5, 6) et la fente (20) étant remplies d'un fluide électro-rhéologique, les surfaces de délimitation (21, 22) de la fente de soupape (20) étant constituées d'un matériau conducteur électrique et isolées électriquement l'une par rapport à l'autre, ainsi qu'une source à haute tension dont les pôles de tension peuvent être reliés à chacune des surfaces de délimitation (21, 22),
**caractérisée en ce qu'**une seule fente de soupape (20) comprenant une section transversale en forme de méandre est prévue et **en ce que** les surfaces de délimitation (21, 22) de la fente de soupape (20) comprennent respectivement une pluralité de villosités parallèles (31, 32), qui s'engrènent lorsqu'on relâche la soupape (20) en forme de méandre.

2. Soupape selon la revendication 1, **caractérisée en ce que** la section transversale de la fente de soupape (20) transversalement à la direction d'écoulement d'une chambre (5, 6) à l'autre (6, 5) est conçue en forme de méandre.

3. Soupape selon la revendication 1 ou 2, **caractérisée en ce que** la fente de soupape (20) comprend une section transversale fermée sensiblement en forme d'anneau.

4. Soupape selon l'une quelconque des revendications 1 à 3, constituée d'un logement (1) cylindrique, qui comprend la première (5) et la seconde chambre (6) ainsi que des éléments encastrés pour séparer les chambres lorsqu'on relâche une fente de soupape (20) parallèle à l'axe cylindrique.

5. Soupape selon la revendication 4, dans laquelle la fente de soupape (20) est réalisée comme un espace annulaire en forme de méandre.

6. Soupape selon l'une quelconque des revendications 1 à 5, dans laquelle le rapport de l'écartement de fente sur la longueur de fente est de 1/20 à 1/200.

7. Soupape selon l'une quelconque des revendications 1 à 5, dans laquelle le rapport de la largeur de fente transversale à la direction d'écoulement sur la longueur de fente est de 3 à 50, de préférence, de 10 à 20.

8. Amortisseur comprenant une soupape selon l'une quelconque des revendications 4 à 7, dans lequel les éléments encastrés pour séparer les chambres (5, 6) sont réalisées sous la forme d'un piston (2) pouvant se déplacer axialement avec la fente de soupape (20) dans le logement (1) en forme de cylindre, le piston (2) étant relié à une tige de piston (3) axiale et la tige de piston (3) faisant saillie hors du logement (1).
